# FASCICULE DE BREVET EUROPEEN

(11) **EP 0 878 125 B1**
(45) Date de publication et mention de la délivrance du brevet: **12.06.2002**
(21) Numéro de dépôt: 98401191.6
(22) Date de dépôt: 18.05.1998
(51) Int. Cl.: A01G 13/02

(54) **Procédé et dispositif de protection de plantations telles que les vignes contre le gel et la grêle**
Verfahren und Vorrichtung zum Frost- und Hagelschutz von Kulturen wie Weinreben
Method and device for protecting crops like grape vine against frost and hail

(30) Priorité: 16.05.1997 FR 9706218
(43) Date de publication de la demande: 18.11.1998
(73) Titulaire: Mamouri, Mohamed, 10200 Bar-sur-Aube (FR)
(72) Inventeur: Mamouri, Mohamed, 10200 Bar-sur-Aube (FR)

(56) Documents cités:
- EP-A- 0 640 279
- WO-A-95/25424
- CA-A- 2 048 157
- CH-A- 138 795
- GB-A- 2 251 777
- US-A- 3 581 436

## Description

La présente invention concerne un dispositif de protection de plantations tel que les vignes, contre le gel et la grêle, se posant sur les piquets de vignes et s'enlevant rapidement et facilement.

Des dispositifs de protection sont dévoilés par EP-A-0 640 279 et US-A-3 581 436.

Les systèmes traditionnels sont posés pour toute la période de risque de gel, car ils sont trop contraignants à poser et à enlever. Pour d'autres systèmes, les vignerons (par exemple) doivent rester éveillés afin de les mettre en route dès l'apparition du gel vers 3 ou 4 heures du matin (exemple : chaufferette, éolienne).

Ce dispositif de protection permet de ne protéger qu'en période de gel (la nuit par exemple) et de découvrir les plantations la journée afin qu'elles profitent des journées ensoleillées ou d'intervenir rapidement pour couvrir les plantations en cas d'annonce de grêle. Le dispositif selon cette invention permet de remédier à ces problèmes.

Ce dispositif permet de couvrir la vigne (ou une autre plantation) avec une toile de protection pour la nuit et de la découvrir le matin pour que les plantes profitent du soleil. Une seule personne peut mettre ce dispositif en place rapidement. A titre d'exemple, pour couvrir 5 rangs (ou plus) sur une longueur de 50 mètres, il mettra 30 minutes environ.

Ce système fixé sur les piquets de vigne, est composé de deux bandes à enrouleur (bâches), protégées par un couvercle de matière plastique. Sur un rang de vigne, on dispose plusieurs système de ce dispositif de protection d'une longueur de deux piquets pour atteindre la longueur de ce rang. La longueur de bâche disponible peut couvrir au choix, 1, 2, 3 ou 4 rayons (voire plus) à la fois de chaque côté. Ce qui permet, avec chaque dispositif de protection, de couvrir 1, 5, 7 ou 9 rangs (voire plus) de plantation. Ce dispositif enroulable en journée ne prend pas de place. Le vigneron peut effectuer le travail ou le traitement de la vigne sans gêne. Ce dispositif de protection peut être facilement démonté en fin de mauvaise saison.

Selon des modes particuliers de réalisation:
- deux rouleaux de toile, qui s'enroulent grâce à un système de ressort, sont fixés à chaque extrémité à une patte métallique.
- Cette patte métallique est soudée sur un tube.
- Ce tube s'emboîte sur les piquets de la vigne ou de la plantation.
- Le dispositif de protection situé en début de rang possède un tube à chaque extrémité. Les systèmes suivants, sur le même rang de plantation, n'auront besoin que d'un seul tube pour s'emboîter dans le piquet de la vigne et posséderont sur le dessus du couvercle en matière plastique, une petite tige de deux centimètres de hauteur. A l'autre extrémité, le couvercle aura une bordure de deux centimètres de large avec un trou, qui s'emboîtera sur la tige de deux centimètres de hauteur du système précédent. Les deux dispositifs se chevaucheront sur deux centimètres. Pour relier les bâches entre elles, une bande Velcro située sur la largeur de la bâche permet de les assembler.
- La bâche possède sur sa longueur une petite barre qui la rend rigide et possède un ou deux anneaux sur sa longueur. Pour dérouler la bâche et pour éviter d'avoir à enjamber les rayons de vignes, on se positionne dans le dernier rang de plantation à protéger. Grâce à une baguette munie d'un crochet, on attrape l'anneau de la bâche, on tire, et on accroche la bâche par cet anneau à un crochet situé au sol.
- Pour découvrir la plantation, il suffit de décrocher l'anneau au sol et de laisser s'enrouler la bâche.
- Le même dispositif de protection des plantations, d'une hauteur d'un piquet, sera placé à chaque extrémité de la vigne, qui sera à ce moment-là, entièrement couverte.

Ce dispositif posé verticalement sera planté dans le sol grâce à un piquet.

Les dessins annexés illustrent l'invention.
La figure 1 représente le dispositif de protection rangé sur les piquets.
La figure 2 représente le dispositif de protection déployé sur la vigne.
La figure 3 représente le dispositif de protection et les éléments que le composent.
La figure 4 représente le même dispositif de protection que la figure 3 mais avec son couvercle de protection.

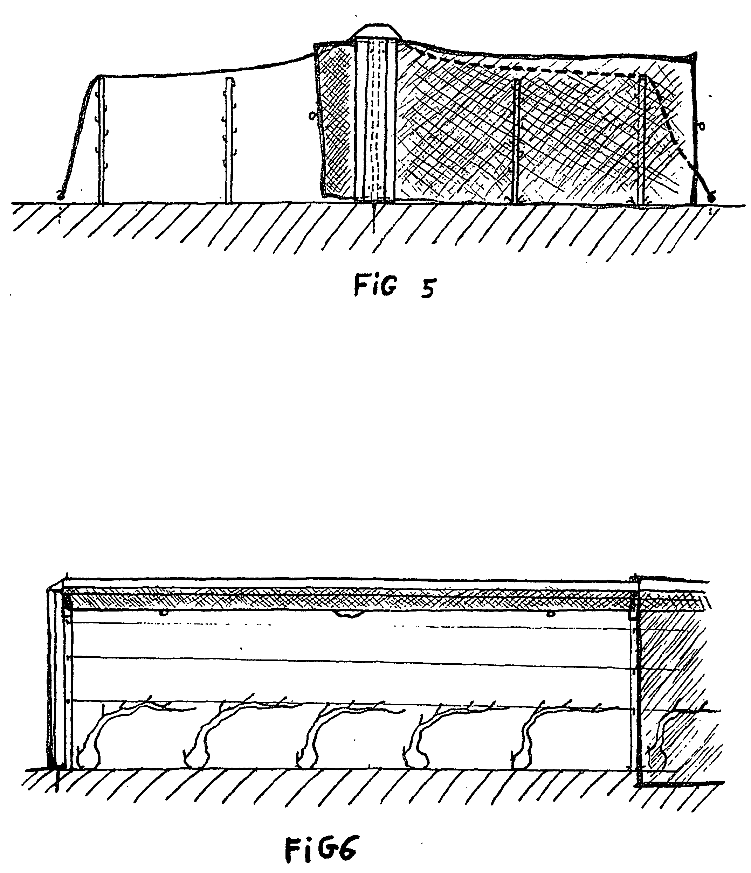

La figure 5 représente le même dispositif de protection que la figure 2 avec la bâche déployée à une extrémités de la vigne verticalement.
La figure 6 représente le même dispositif de protection que la figure 1 et la figure 2 vu sur une longueur de piquet.

En référence à ces dessins, le dispositif de protection(fig.3) de la vigne comporte deux bâches qui s'enroulent grâce à un système de ressort et qui sont fixées à chaque extrémité à une patte métallique(2). Cette patte métallique est elle-même soudée sur un tube(3) d'une longueur de dix centimètres environ. Ce tube s'emboîte sur le piquet de vigne.

Des pattes de fixation(4) permettent de visser le couvercle de protection en matière plastique.

La bâche de protection(1) possède sur la longueur une petite barre(5) qui la rend rigide et qui évite que la bâche ne rentre complètement dans le couvercle de protection en matière plastique et qui permet de la plaquer au sol quand la bâche est étendue. Un ou deux anneaux sont situés sur sa longueur afin de permettre l'accrochage au sol.

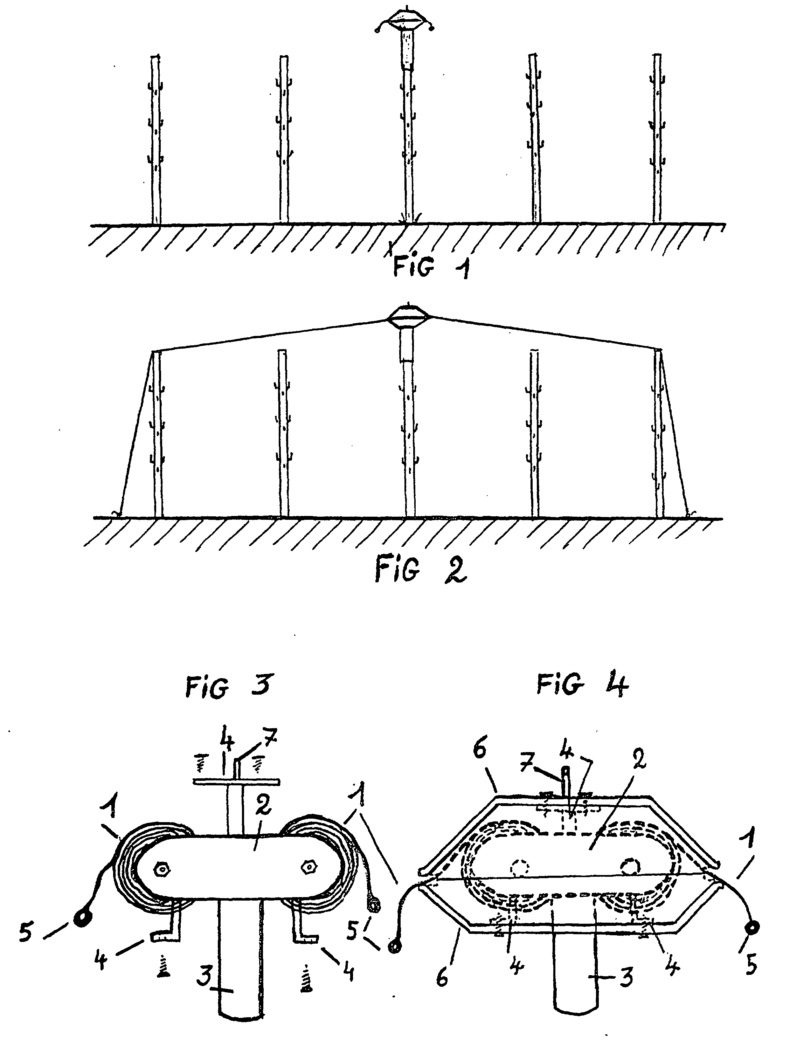

Ce dispositif de protection est protégé(fig.4) par un couvercle(6) en matière plastique.

A une extrémité, ce dispositif possédera une tige(7) de deux centimètres de hauteur qui permettra d'emboîter le système suivant.

Son application à la viticulture se trouve toute indiquée, vu la facilité d'emploi. En effet, une personne seule peut couvrir ou découvrir la vigne.

Ce système de protection peut également s'appliquer à d'autres cultures et plantations.

## Revendications

1. Dispositif de protection de plantation **caractérisé par le fait qu'**il comporte deux bâches(1) qui s'enroulent grâce à un système de ressort et qui sont fixées à chaque extrémité d'une patte métallique(2) destinée à être posée sur un piquet de la plantation.

2. Dispositif selon la revendication 1 **caractérisé par le fait que** cette patte métallique(2) est soudée à un tube(3) d'une longueur de dix centimètres environ.

3. Dispositif selon la revendication 2 **caractérisé par le fait que** ce tube(3) d'une longueur de dix centimètres environ s'emboîte sur le piquet de la plantation.

4. Dispositif selon la revendication 1 **caractérisé par le fait qu'**il comporte des pattes de fixation(4) et un couvercle de protection(6) en matière plastique, ces pattes(4) permettant de visser le couvercle de pretection(6) en matière plastique.

5. Dispositif selon la revendication 1 **caractérisé par le fait que** la bâche de protection(1) possède sur sa longueur une petite barre(5) qui la rend rigide et qui évite que la bâche(1) ne rentre dans le couvercle de protection(6) en matière plastique, qui permet également de la plaquer au sol quand la bâche est étendue et qui possède sur sa longueur un ou deux anneaux afin de permettre l'accrochage au sol.

6. Dispositif selon la revendication 4 **caractérisé par le fait que** ce dispositif de protection de plantation est protégé par un couvercle(6) en matière plastique.

7. Dispositif selon la revendication 4 **caractérisé par le fait que** la patte de fixation(4) possède une tige(7) de deux centimètres de hauteur qui lui permettra d'emboîter le système suivant.

## Patentansprüche

1. Vorrichtung zum Schutz von Pflanzungen, dadurch gezeichnet dass, sie zwei Planen (1) enthält, die sich mittels eines Federsystems aufrollen und die an jedem Ende eines metallischen Bügels (2) befestigt sind, der dazu bestimmt ist, auf einem Pflanzungspfahl zu sitzen.

2. Vorrichtung nach Anspruch 1, dadurch gezeichnet dass, dieser metallische Bügel (2) auf ein Rohr (3) geschweißt ist, das circa zehn Zentimeter lang ist.

3. Vorrichtung nach Anspruch 2, dadurch gezeichnet dass, dieses Rohr (3), das circa zehn Zentimeter lang ist, auf den Pflanzungspfahl hineinpasst.

4. Vorrichtung nach Anspruch 1, dadurch gezeichnet dass, diese Befestigungsbügel (4) und einen Schutzdeckel (6) aus Kunststoff enthält, diese Bügel (4) erlauben den Schutzdeckel (6) aus Kunststoff zu schrauben.

5. Vorrichtung nach Anspruch 1, dadurch gezeichnet dass, die Schutzplane (1) auf deren Länge eine kleine Stange (5) hat, die diese steif macht und vermeidet, dass die Plane (1) in den Schutzdeckel (6) aus Kunststoff hineingeht, die auch ermöglicht diese auf den Boden zu drücken, wenn die Plane ausgebreitet ist und die einen oder zwei Ringe auf deren Länge hat, um die Befestigung an den Boden zu erlauben.

6. Vorrichtung nach Anspruch 4, dadurch gezeichnet dass, die Schutzvorrichtung für Pflanzungen ist mit einem Deckel (6) aus Kunststoff geschützt ist

7. Vorrichtung nach Anspruch 4, dadurch gezeichnet dass, der Befestigungsbügel (4) eine zwei Zentimeter hohe Stange (7) besitzt, die ermöglicht, das darauf folgende System hineinzusetzen.

## Claims

1. Plantation protection device **characterized in that** it comprises two tarpaulins (1) which are rolled out using a spring system and which are fixed to each end of a metal bracket (2) which meant to be placed on a plantation's picket.

2. Device according to claim 1 **characterized in that** this metal bracket (2) is welded to a tube (3) which is about ten centimetres long.

3. Device according to claim 2 **characterized by** the fact that this tube (3) which is about ten centimetres long fits onto the plantation's picket.

4. Device according to claim 1 which is **characterized in that** it comprises retaining brackets (4) and a protective cover (6) of plastic material, these brackets (4) allow the protective cover (6) of plastic material to be screwed on.

5. Device according to claim 1 **characterized in that** the protective tarpaulin (1) has on its length a small bar (5) which keeps it rigid and which prevents the tarpaulin (1) from getting into the protective cover (6) of plastic material, which also allows it to be pinned to the ground when the tarpaulin is stretched out and which has one or two rings along its length allowing it to be fixed to the ground.

6. Device according to claim 4 **characterized in that** the plantation protection device is protected by a cover (6) of plastic material

7. Device according to claim 4 **characterized in that** the fixing bracket (4) has a rod (7) which is two centimetres high which allows the next system to be fitted into.
